# EUROPEAN PATENT APPLICATION

(11) **EP 2 672 018 A1**
(43) Date of publication of application: **11.12.2013**
(21) Application number: 12170831.7
(22) Date of filing: 05.06.2012
(51) Int. Cl.: E02F 3/96, B23D 17/06, E04G 23/08

(54) **Blade positioning structure for a shear for a works machine**

(71) Applicant: Ko, Seung Hwan, Yeonsu-gu Incheon 406-841 (KR)
(72) Inventor: Ko, Seung Hwan, Yeonsu-gu Incheon 406-841 (KR)
(74) Representative: Liesegang, Eva

(57) **Abstract**

The present invention provides a blade positioning structure for a shear, in which a first jaw comprising a first lower shear blade and a second jaw comprising a second lower shear blade are connected with each other by a jaw pin, the second lower shear blade being configured to perform a shearing operation in cooperation with the first lower shear blade. A first upper shear blade is formed above the first lower shear blade, and a third shear blade is configured to perform the shearing operation in cooperation with the first upper shear blade. A distance between a first shearing point formed by the first lower shear blade and the second lower shear blade, and the center of the jaw pin is shorter than that between a second shearing point formed by the first upper shear blade and the third shear blade, and the center of the jaw pin.

## Description

### BACKGROUND OF THE INVENTION

### Field of the Invention

The present invention relate to a blade positioning structure for a shear, and more particularly, to such a blade positioning structure for a shear, which is attached to a work apparatus of heavy construction equipment such as an excavator and is used to cut reinforcing bars, metal scraps, or the like.

### Background of the Related Art

In general, a shear, i.e., a shearing machine is attached to a work apparatus of the heavy construction equipment such as an excavator and is used to cut reinforcing bars, metal scraps, or the like. Such a shearing operation is performed to cut many different forms of wastes into small-sized pieces to facilitate loading and transportation of the wastes.

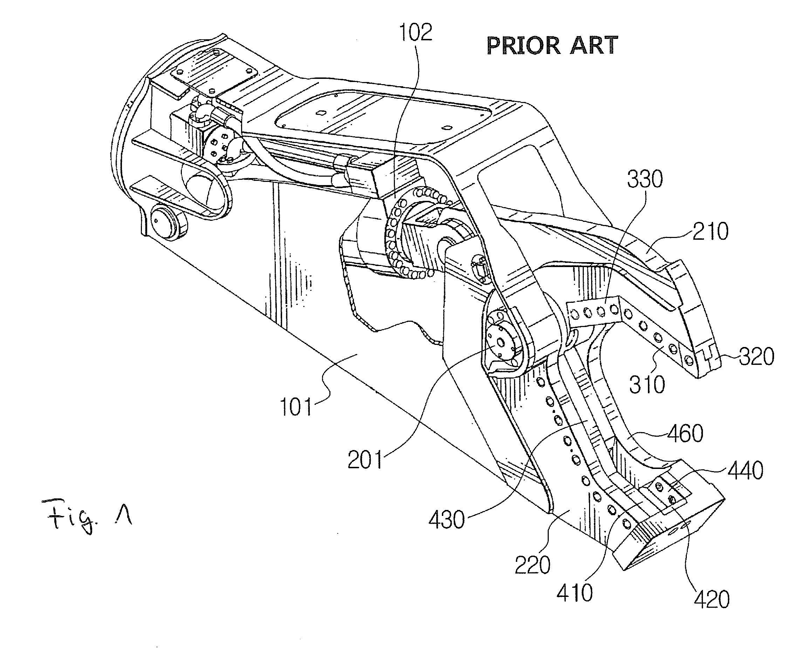

A typical shear has a shape as shown in FIG 1, and includes an operating cylinder 102 mounted on a frame 101 of the shear. A first jaw 210 connected to the frame 101 by a jaw pin 201 is operated by the operating cylinder 102, and a second jaw 220 mounted to the frame 101 shears or cuts a to-be-cut object or a workpiece in cooperation with the first jaw 210.

Although it is shown in FIG. 1 that the second jaw 220 is mounted to the frame 101, the shear may further include a separate operating cylinder 102 configured to operate the second jaw.

The workpiece is sheared by closing the upper jaw against the lower jaw under hydraulic pressure, with the shear blades cutting the workpiece.

The first jaw 210 includes a first main shear blade and a first sub shear blade 330.

The first main shear blade includes a first lower shear blade 310 and a first tip shear blade 320. The first tip shear blade 320 is attached to the first jaw 210 to in such a fashion as to be disposed on the top and bottom surfaces and a front surface of a front end of the first jaw 210. The first lower shear blade 310 and the first sub shear blade 330 are arranged to form a predetermined angle with respect to each other. Alternatively, the first lower shear blade 310 and the first sub shear blade 330 may be arranged abreast of each other. In addition, a separate shear blade is not included at a side opposite to the first lower shear blade 310, and the shearing or cutting work is performed by the cooperative operation of the first lower shear blade 310 and a second lower shear blade 410 and/or a second sub shear blade 430, which will be described later.

The second jaw 220 includes a second lower shear blade 410, a second sub shear blade 430, a second auxiliary shear blade 440, and a second tip shear blade 420. The second lower shear blade 410 and the second sub shear blade 430 are arranged to form a predetermined angle with respect to each other. Alternatively, the second lower shear blade 410 and the second sub shear blade 430 may be arranged abreast of each other. In addition, the second lower shear blade 410, the second tip shear blade 420, and the second auxiliary shear blade 440 are arranged to form a generally " 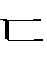 " shape at a front end of the second jaw 220.

A guide blade 460 is formed at the remaining portion except the second auxiliary shear blade 410 at a top of the front end of the second jaw 220.

In case of a to-be-cut object or a workpiece that takes the shape of a flat plate such as an iron plate, an initial stage is carried out in which the first tip shear blade 320 starts to shear the to-be-cut object while being moved to enter an internal space defined by the second lower shear blade 410, the second tip shear blade 420, and the second auxiliary shear blade 440, which form a generally " 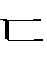 " shape. Without this initial stage, the to-be-cut object will not be cut between the first jaw 210 and the second jaw 220, but a jam phenomenon may occur in which the space between the jaws are widened to cause the to-be-cut object to be jammed into the space, which makes it impossible to shear or cut the workpiece. Subsequently to the initial stage, the first lower shear blade 310 and the first sub shear blade 330 cut the to-be-cut object in cooperation with the second lower shear blade 410 and the second sub shear blade 430. On the other hand, in the initial stage, the first tip shear blade 320, the second tip shear blade 420, and the second auxiliary shear blade 440 may cooperate with one another to bear the workpiece, so that a shearing or cutting surface can be formed smoothly. However, subsequently to the initial stage, in a general shearing stage in which the first tip shear blade 320, the second tip shear blade 420, and the second auxiliary shear blade 440 are involved no longer in the shearing operation, a shearing portion of the workpiece is cut in a state of being supported by the guide blade 460, and thus the supported shearing portion of the workpiece may be torn off or bent by the first jaw 210 that doest not include a separate shear blade corresponding to the guide blade 460 of the second jaw 220, which makes it difficult to handle the to-be-cut object.

In addition, in the case where a rod-like to-be-cut object such as a pipe or an H-beam is cut in a direction perpendicular to the lengthwise direction of the to-be-cut object, the first lower shear blade 310 and the first sub shear blade 330 of the first jaw 210 perform a shearing operation on the to-be-cut object in cooperation with the second lower shear blade 410 and the second sub shear blade 430 of the second jaw 220. In this case, since the first lower shear blade 310 and the first sub shear blade 330, and the second lower shear blade 410 and the second sub shear blade 430 are arranged so as to be inclined at a predetermined angle, respectively, the to-be-cut object does not escape from the jaws during the shearing operation, but the shearing operation is performed smoothly on the to-be-cut object. However, in case of such a rod-like to-be-cut object, it is subjected to the shearing operation in a state of being put between the first lower shear blade 310/the first sub shear blade 330 and the second lower shear blade 410/the second sub shear blade 430, and thus there is caused a problem in that the rod-like to-be-cut object may be jammed during the shearing operation due to a lack of a configuration to act as a support for preventing the jam phenomenon in the initial stage as in case of the flat plate-like to-be-cut object

### SUMMARY OF THE INVENTION

Accordingly, the present invention has been made in order to solve the above-mentioned problems occurring in the prior art, and it is an object of the present invention to provide a blade positioning structure for a shear, which can minimize the tearing of a shearing surface of a flat plate-like to-be-cut object, and can support a rod-like to-be-cut object during the shearing operation of the rod-like to-be-cut object, thereby improving the efficiency of a shearing and handling operation of the to-be-cut object.

To achieve the above objects, in accordance with a preferred embodiment, the present invention provides a blade positioning structure for a shear, in which a first jaw comprising a first lower shear blade and a second jaw comprising a second lower shear blade are connected with each other by means of a jaw pin, the second lower shear blade being configured to perform a shearing operation in cooperation with the first lower shear blade, **characterized in that** the first jaw comprises a first upper shear blade formed above the first lower shear blade, and the second jaw comprises a third shear blade configured to perform the shearing operation in cooperation with the first upper shear blade, and in that the shear blades are arranged in such a fashion that a distance between a first shearing point formed by the first lower shear blade and the second lower shear blade, and the center of the jaw pin is shorter than that between a second shearing point formed by the first upper shear blade and the third shear blade, and the center of the jaw pin.

Preferably, the blade positioning structure is **characterized in that** an angle formed by the first upper shear blade and the third shear blade is made larger than that formed by the first lower shear blade and the second lower shear blade.

Preferably, the blade positioning structure is **characterized in that** the first upper shear blade and the first lower shear blade are formed as a unitary piece.

Preferably, the blade positioning structure is **characterized in that** a first tip shear blade is formed at a connecting portion by which the first upper shear blade and the first lower shear blade are connected with each other.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 is a perspective view illustrating a blade positioning structure for a shear according to the prior art;

FIG. 2 is a perspective view illustrating a blade positioning structure for a shear according to an embodiment of the present invention;

FIGs. 3 and 4 are views illustrating the shearing operation of a shear according to an embodiment of the present invention;

FIG 5 is a view illustrating the shearing operation of a shear according to another embodiment of the present invention; and

FIG. 6 is a view illustrating another example of the shearing operation of a shear according to an embodiment of the present invention.

[Explanation on symbols]

101: frame 102: operating cylinder

201: jaw pin 210: first jaw

220: second jaw 305: first upper shear blade

310: first lower shear blade

320: first tip shear blade

330: first sub shear blade

410: second lower shear blade

420: second tip shear blade

430: second sub shear blade

440: second auxiliary shear blade

460: guide blade

500: third shear blade

610: flat plate-like to-be-cut object

620: rod-like to-be-cut object

### DETAILED DESCRIPTION OF THE PREFERRED EMBODIMENTS

Reference will be now made in detail to preferred embodiments of the present invention with reference to the attached drawings. In the following description, the detailed description on known function and constructions unnecessarily obscuring the subject matter of the present invention will be avoided hereinafter. Also, the terms used herein are defined in consideration of the function of the present invention, which may vary according to an intention of a user or an operator or according to custom. Thus, definition of such terms should be made based on content throughout the specification disclosing a blade positioning structure for a shear according to the present invention.

Now, a preferred embodiment of the present invention will be described hereinafter in more detail with reference to the accompanying drawings.

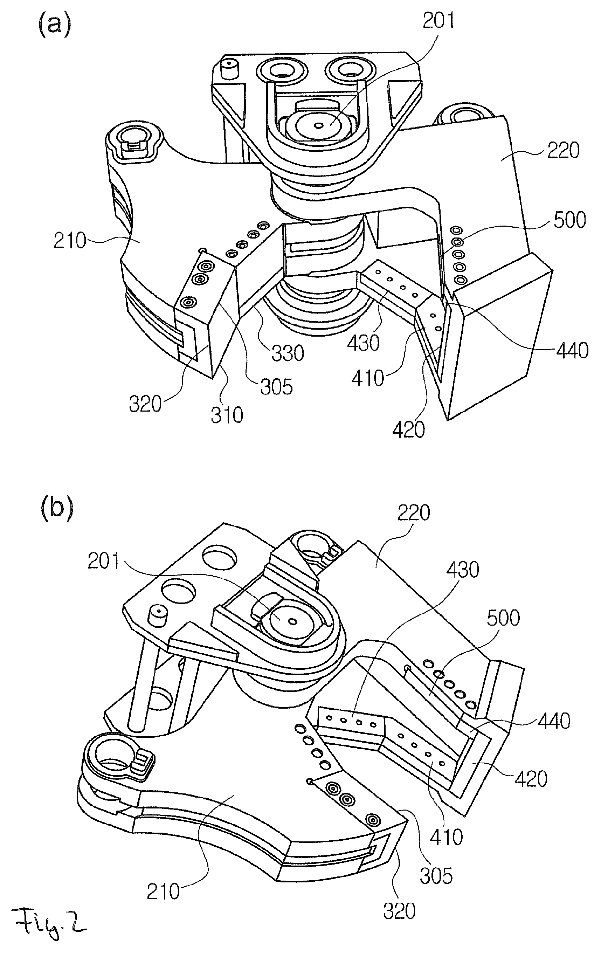

FIG. 2 is a perspective view illustrating a blade positioning structure for a shear according to an embodiment of the present invention.

Each of a first jaw 210 and a second jaw 220 according to the present invention includes a shear blade as in a typical jaw, and are connected with each other by a jaw pin 201.

The first jaw 210 includes a first upper shear blade 305, a first lower shear blade 310, and a first tip shear blade 320. The first upper shear blade 305, the first lower shear blade 310, and the first tip shear blade 320 are formed as a unitary piece to ensure the strength, but may be formed separately. In addition, the first jaw 210 includes a first sub shear blade 330. The first sub shear blade 330 performs the same function as that in a typical shear, and thus the detailed description will be omitted to void redundancy. The first upper shear blade 305 and the first lower shear blade 310 preferably have substantially the same length as each other.

The second jaw 220 includes a second lower shear blade 410 and a second sub shear blade 430. In addition, the second jaw 220 includes a second tip shear blade 420 and a second auxiliary shear blade 440. This configuration of the second jaw 220 is the same as that of the conventional second jaw. In this embodiment, the second jaw 220 includes a separate third shear blade 500 that can perform a shearing operation on a to-be-cut object in cooperation with the first upper shear blade 305.

The second auxiliary shear blade 440 and the third shear blade 500 may be formed as a unitary piece. Although the second auxiliary shear blade 440 and the third shear blade 500 are formed as a unitary piece, they may be distinguished from each other depending on the function of each shear blade.

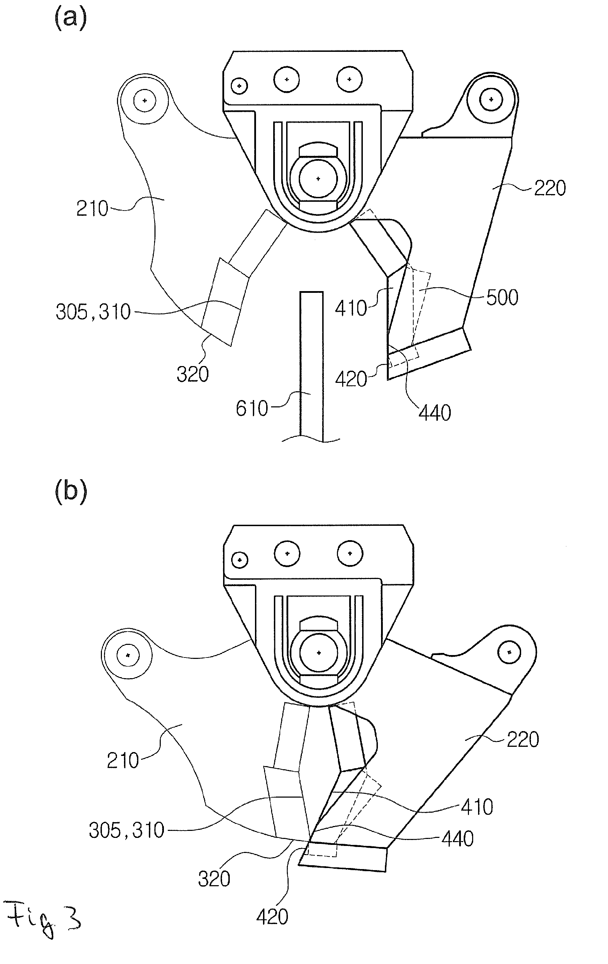

FIG. 3(a) shows a state in which a flat plate-like to-be-cut object 610 is positioned between the first jaw 210 and the second jaw 220. FIG. 3(b) shows an initial stage in which the first upper shear blade 305, the first lower shear blade 310, and the first tip shear blade 320, which are formed as a unitary piece, start to shear the to-be-cut object while being moved to enter an internal space defined by the second lower shear blade 410, the second tip shear blade 420, and the second auxiliary shear blade 440, which form a generally " 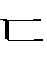 " shape. In FIGs. 3(b) to 5, the drawing of the to-be-cut object will be omitted for the sake of brevity.

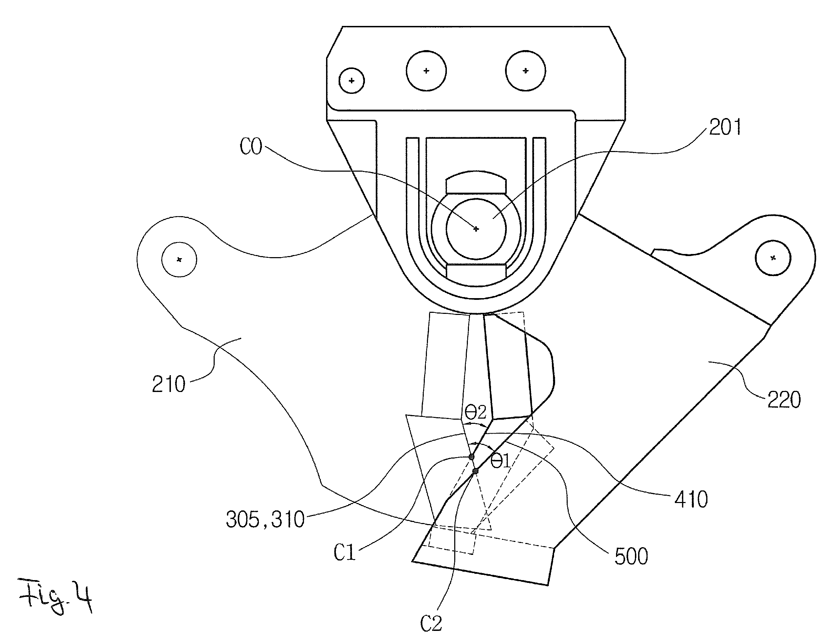

FIG. 4 shows a general shearing operation of a shear in a shearing operation is performed subsequently the initial stage.

Referring to FIG. 4, the shear blades are arranged in such a fashion that a distance between a first shearing point C1 formed by the first lower shear blade 310 and the second lower shear blade 410, and the center C0 of the jaw pin 201 is shorter than that between a second shearing point C2 formed by the first upper shear blade 305 and the third shear blade 500, and the center C0 of the jaw pin 201.

If the second lower shear blade 410 and the third shear blade 500 are arranged in parallel with each other similarly to the first upper shear blade 305 and the first lower shear blade 310, the first and second shearing points C1 and C2 are formed at the same position. In this case, a shearing force is divided by half at the first and second shearing points C1 and C2, resulting in a reduction in shearing efficiency. In addition, there frequently occurs a case in which a front end of the first jaw 210 applies pressure to the to-be-cut object to cause the to-be-cut object to be torn off in the proximity of the shearing point. Thus, the first shearing point C1 is formed nearer to the center C0 of the jaw pin than the second shearing point C2, so that the shearing force of the first shearing point C1 can be made larger than that of the second shearing point C2, and the to-be-cut object can be prevented from being torn off.

In the embodiments shown in FIGs. 3 and 4, an angle θ1 formed by the first upper shear blade 305 and the third shear blade 500 is made larger than an angle θ2 formed by the first lower shear blade 310 and the second lower shear blade 410.

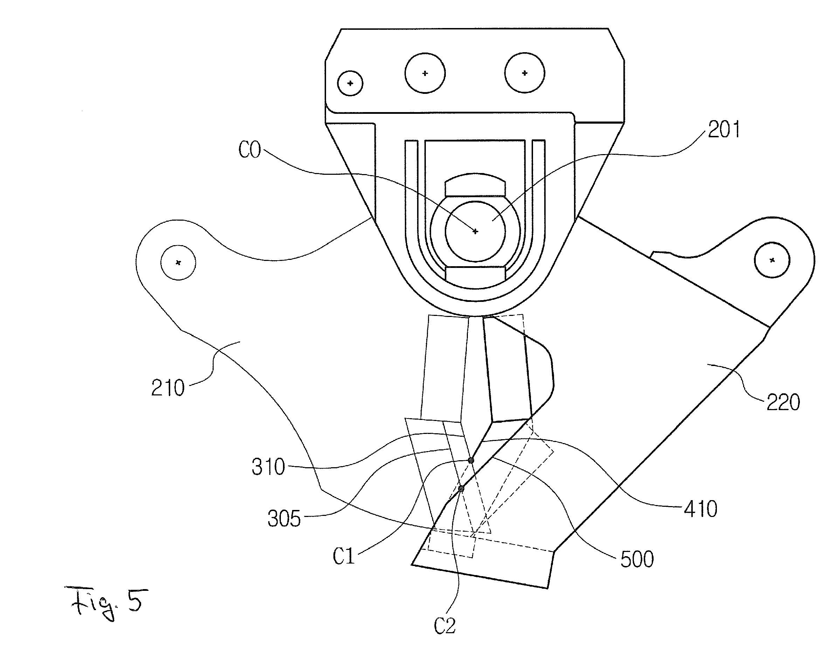

Moreover, as shown in FIG. 5, the first upper shear blade 305 may be allowed to be positioned behind the first lower shear blade 310 to form the first and second shearing points as in this embodiment.

Therefore, when the jaws receive the same moment, a larger shearing force acts on the first shearing point C1 than the second shearing point C2, as well as the jaws are supported together at the second shearing point C2 along with the shearing operation. As a result, the shearing surface of the to-be-cut object between the first and second shearing points C1 and C2 are cut cleanly.

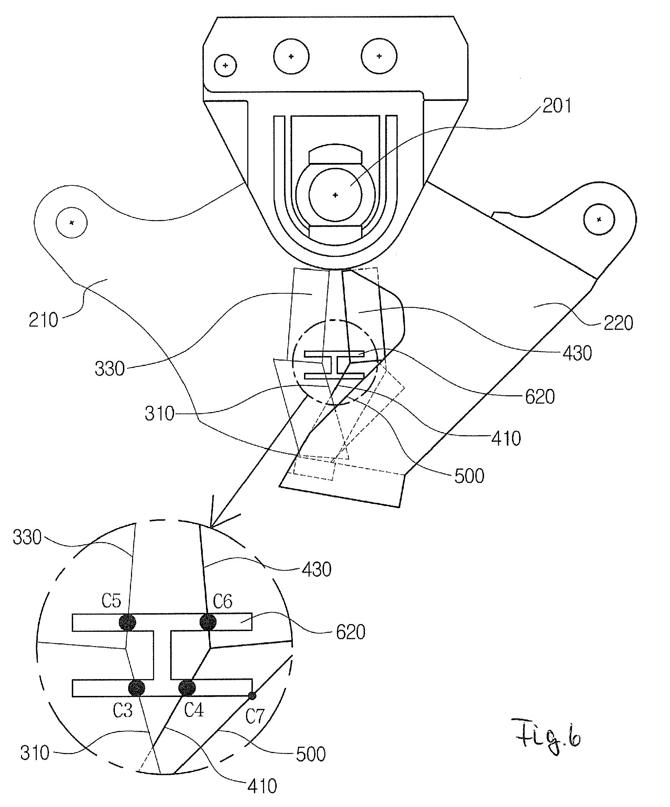

FIG. 6 shows a state in which the shear of FIG. 4 performs a shearing operation on a rod-like to-be-cut object 620 having an H-beam shape

The rod-like to-be-cut object 620 is subjected to the shearing operation in a state of being inserted between the first lower shear blade 310 and the first sub shear blade 330, and the second lower shear blade 410 and the second sub shear blade 430. In this case, shearing points C3, C4, C5 and C6 are formed between the shear blades 310, 410, 330 and 430, and the rod-like to-be-cut object, and a bearing point C7 in which the third shear blade 500 bears the rod-like to-be-cut object is formed at a position spaced apart from the shearing point C4 along a lengthwise direction of the rod-like to-be-cut object, so that a jam phenomenon can be prevented from occurring between the rod-like to-be-cut object and the shear blades in the initial stage of the shearing operation. In the process in which the shearing operation continues to be performed on the rod-like to-be-cut object along the shearing points C3, C4, C5 and C6, the third shear blade 500 continuously bear the rod-like to-be-cut object at the bearing point C7 by virtue of rigidity of the rod-like to-be-cut object, and the rod-like to-be-cut object 620 is sheared along the shearing points into small pieces, which are in turn separated from each other. In the entire shearing process, the third shear blade 500 is not involved in the shearing operation of the rod-like to-be-cut object, but merely bears the rod-like to-be-cut object, so that the shearing force is concentrated on the respective shearing points C3, C4, C5 and C6, thereby improving the shearing efficiency.

As described above, according to the present invention, the tearing of the shearing surfaces of the flat plate-like to-be-cut object can be minimized, and a rod-like to-be-cut object can be supported during the shearing operation of the rod-like to-be-cut object to prevent a jam phenomenon, thereby improving the efficiency of a shearing and handling operation of the to-be-cut object.

While the present invention has been described in connection with the optimum exemplary embodiments illustrated in the drawings, the terminology used herein is for the purpose of describing particular embodiments only and is not intended to limit the meaning of the invention or limit the scope of the invention disclosed in the claims. Also, it is to be understood that various equivalent modifications and variations of the embodiments can be made by a person having an ordinary skill in the art without departing from the spirit and scope of the present invention. Therefore, various embodiments of the present invention are merely for reference in defining the scope of the invention, and the true technical scope of the present invention should be defined by the technical spirit of the appended claims.

## Claims

1. A blade positioning structure for a shear, in which a first jaw comprising a first lower shear blade and a second jaw comprising a second lower shear blade are connected with each other by means of a jaw pin, the second lower shear blade being configured to perform a shearing operation in cooperation with the first lower shear blade, **characterized in that** the first jaw comprises a first upper shear blade formed above the first lower shear blade, and the second jaw comprises a third shear blade configured to perform the shearing operation in cooperation with the first upper shear blade, and **in that** the shear blades are arranged in such a fashion that a distance between a first shearing point formed by the first lower shear blade and the second lower shear blade, and the center of the jaw pin is shorter than that between a second shearing point formed by the first upper shear blade and the third shear blade, and the center of the jaw pin.

2. The blade positioning structure according to claim 1, **characterized in that** an angle formed by the first upper shear blade and the third shear blade is made larger than that formed by the first lower shear blade and the second lower shear blade.

3. The blade positioning structure according to claim 1, **characterized in that** the first upper shear blade and the first lower shear blade are formed as a unitary piece.

4. The blade positioning structure according to claim 3, **characterized in that** a first tip shear blade is formed at a connecting portion by which the first upper shear blade and the first lower shear blade are connected with each other.
